(19) Europäisches Patentamt
European Patent Office
Office européen des brevets

(11) **EP 0 467 387 B1**

(12) **EUROPEAN PATENT SPECIFICATION**

(45) Date of publication and mention
of the grant of the patent:
**15.05.1996 Bulletin 1996/20**

(51) Int Cl.6: **H04L 27/22**, G06G 7/163

(21) Application number: **91112116.8**

(22) Date of filing: **19.07.1991**

(54) **Costas loop carrier wave reproducing circuit**

Trägerwellenwiedergabeschaltung mit Costasschleife

Circuit de reproduction d'une onde porteuse à boucle de costas

(84) Designated Contracting States:
**DE FR GB**

(30) Priority: **19.07.1990 JP 191742/90**

(43) Date of publication of application:
**22.01.1992 Bulletin 1992/04**

(73) Proprietor: **NEC CORPORATION**
**Tokyo (JP)**

(72) Inventor: **Nakayama, Isao**
**Minato-ku, Tokyo (JP)**

(74) Representative: **Betten & Resch**
**Reichenbachstrasse 19**
**D-80469 München (DE)**

(56) References cited:
**EP-A- 0 356 556**      **DE-A- 2 803 729**
**GB-A- 2 151 863**      **US-A- 3 689 752**
**US-A- 4 694 204**

• **U. TIETZE / CH. SCHENK**
**'Halbleiterschaltungstechnik, 8. Auflage' 1986 ,**
**SPRINGER-VERLAG , BERLIN, DE**

## Description

<u>Background of the Invention</u>

The present invention relates to a demodulator for a four-phase modulated wave and, more particularly, to a Costas loop carrier wave reproducing circuit.

In general, a digital phase modulation scheme for carrier waves, called "PSK", is superior in its frequency band characteristics and code error rate characteristics to other modulation schemes such as amplitude modulation, frequency modulation, and pulse modulation, and hence is widely used in, e.g., PCM microwave communications, satellite communications, and data transmission modems.

This phase modulation scheme includes two-, four-, and eight-phase PSK schemes which can transmit 1-, 2-, and 3-bit data per one sampling period, respectively. The four-phase PSK scheme is most widely used in practice because a PSK scheme for more than four phases demands strict identification characteristics and the arrangement of the modulator becomes complicated.

In this four-phase PSK scheme, the digital code of a signal to be transmitted is divided for every two bits, and a carrier wave is modulated by a phase shift amount corresponding to one of the four combinations of 2-bit data. In many four-phase schemes currently used in practice, phase shift amounts of $0$, $\pi/2$, $\pi$, and $3\pi/2$ respectively correspond to the four combinations $(0, 0)$, $(0, 1)$, $(1, 0)$, and $(1, 1)$. According to this scheme, a 2-bit signal component is contained in an inphase component Pcoswct and an orthogonal component Qsinwct of a carrier wave. For this reason, in demodulation, the inphase and orthogonal components of the carrier wave are respectively detected to identify their polarities.

In this case, a synchronous detection scheme is often used as a detection scheme because it has good code error rate characteristics. Unlike other delay detection schemes, however, in the synchronous detection scheme, a carrier wave reproducing circuit must be prepared on the reception side to generate a carrier wave having a correct phase.

This carrier wave reproducing circuit is designed to control a phase-locked loop circuit (PLL) by using a signal obtained by removing a code component from an input carrier wave.

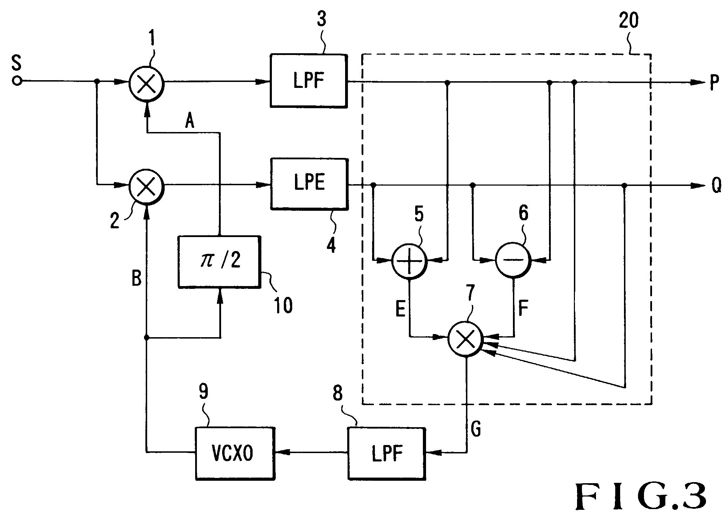

Fig. 3 is a block diagram showing the principle of a four-phase demodulating circuit. Referring to Fig. 3, reference numerals 1, 2, and 7 denote multipliers; 3, 4, and 8, LPFs (low-pass filters); 5, an adder; 6, a subtracter; 9, a VCXO; 10, a phase shifter; and 20, Costas loop carrier wave reproducing circuit.

A signal S as a four-phase modulated wave is represented by the following equation, provided that wt is the frequency of a carrier wave, and $\theta$ is a phase shift of 0, 90°, 180°, or 270°:

$$S = E\cos(wt + \theta) \tag{1}$$

If two outputs (one of them is delayed by $\pi/2$) from the VCXO (voltage-controlled crystal oscillator) 9 are respectively represented by A and B, the following equations can be established:

$$A = E_1\sin(wt + \theta_1) \tag{2}$$

$$B = E_1\cos(wt + \theta_1) \tag{3}$$

When the four-phase modulated wave S and the oscillator outputs A and B are demodulated by the multipliers 1 and 2 and are filtered by the LPFs (low-pass filters) 3 and 4, the multiplication of equations (1) and (2) is rewritten as follows:

$$E\cos(wt + \theta) \times E_1\sin(wt + \theta_1)$$

$$= \frac{E \cdot E_1}{2} \{\sin(2wt + \theta + \theta_1) - \sin(\theta_1 - \theta)\}$$

If this equation is filtered by an LPF, the following expression is obtained:

$$\fallingdotseq \frac{E \cdot E_1}{2} \sin(\theta - \theta_1) \tag{4}$$

Similarly, the multiplication of equations (1) and (3) is represented by

$$E\cos(wt + \theta) \times E_1\cos(wt + \theta_1)$$

$$= \frac{E \cdot E_1}{2} \{\cos(2wt + \theta + \theta_1) + \cos(\theta - \theta_1)\}$$

$$\fallingdotseq \frac{E \cdot E_1}{2} \cos(\theta - \theta_1) \tag{5}$$

The outputs from the LPFs are then processed by the Costas loop carrier wave reproducing circuit 20. The circuit 20 serves to keep the phase of an output from the VCXO constant regardless of the phase state (0. 90°, 180°, 270°) of an input four-phase modulated wave.

If the demodulated signals of equations (4) and (5) are respectively represented by P and Q, P + Q is output from an output E point of the adder 5; P - Q, from an output F point of the subtracter 6; and P x Q x (P + Q) x (P - Q), from an output G point of the multiplier 7. At the output E, the following equations are established:

$$P \times Q = \frac{E \cdot E_1}{2} \sin(\theta - \theta_1) \times \frac{E \cdot E_1}{2} \cos(\theta - \theta_1)$$

$$= \frac{(E \cdot E_1)^2}{8} \sin(2\theta - 2\theta_1) \qquad (6)$$

$$(P + Q) \, X \, (P - Q) = P^2 - Q^2 =$$

$$\{\frac{E \cdot E_1}{2} \sin(\theta - \theta_1)\}^2 - \{\frac{E \cdot E_1}{2} \cos(\theta - \theta_1)\}^2$$

$$= -\frac{(E \cdot E_1)^2}{4} \cos(2\theta - 2\theta_1) \qquad (7)$$

At the output G point, the following equation can be obtained by the multiplication of equations (6) and (7):

$$(P + Q) \cdot (P - Q) \cdot PQ = \frac{(E \cdot E_1)^2}{8} \sin$$

$$(2\theta - 2\theta_1) \times \{ -\frac{(E \cdot E_1)^2}{4} \cos(2\theta - 2\theta_1)\}$$

$$= -\frac{(E \cdot E_1)^4}{64} \{\sin(4\theta - 4\theta_1) + \sin\theta\}$$

$$= -\frac{(E \cdot E_1)^4}{64} \sin4(\theta - \theta_1)$$

In this case, a phase difference $(\theta - \theta_1)$ between the four-phase modulated wave, the output signal from the VCXO is $n\pi/2$, and the output voltage relatively becomes 0 (n = integer), and the PLL is locked in this state.

If, therefore, this output is fed back to the VCXO 9 through the LPF 8, the data of the signals P and Q are demodulated.

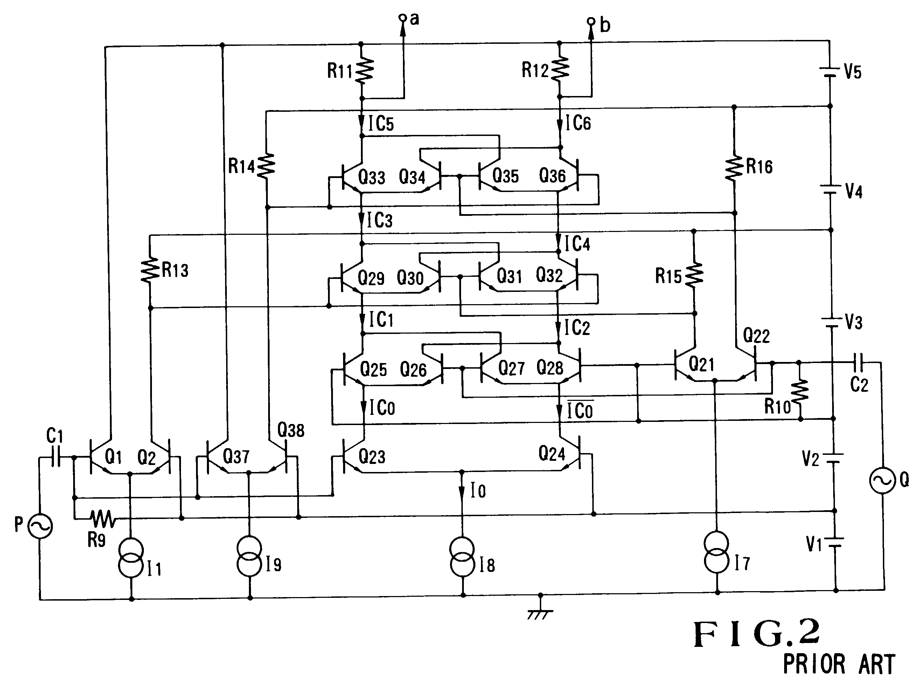

Fig. 2 is a circuit diagram showing the detailed arrangement of the conventional Costas loop carrier wave reproducing circuit 20 shown in Fig. 3. This conventional technique is disclosed in U.S.P. No. 4,694,204, Sep. 15, 1987, assigned to NEC Corporation. This circuit comprises a first multiplying circuit constituted by a double differential amplifier circuit consisting of transistors $Q_{23}$ to $Q_{28}$ and a constant current source $I_8$, a second multiplying circuit constituted by a double differential amplifier circuit consisting of transistors $Q_{29}$, to $Q_{32}$ for providing collector currents to the first multiplying circuit as common emitter currents, a third multiplying circuit constituted by a double differential amplifier circuit consisting of transistors $Q_{33}$ to $Q_{36}$ for providing collector currents to the second multiplying circuit as common emitter currents, load resistors $R_{11}$ and $R_{12}$ for applying a collector current, as an output voltage, from the fourth multiplying circuit to output terminals a and b, three differential amplifiers, constituted by transistors $Q_1$, $Q_2$, $Q_{21}$, $Q_{22}$, $Q_{37}$, and $Q_{38}$, constant current sources $I_1$, $I_7$, and $I_9$, and load resistors $R_{13}$ to $R_{16}$, for generating input voltages of the demodulated signals P and Q and their sum and difference signals, a bias circuit, constituted by DC power sources $V_1$ and $V_2$ and resistors $R_9$ and $R_{10}$, for biasing the three differential amplifiers, and a peripheral circuit constituted by DC power sources $V_3$, $V_4$, and $V_5$.

Assume that the inphase demodulated signal P is input through a coupling capacitor $C_1$. In this case, since the bases of the transistors $Q_1$ and $Q_{38}$ are biased by the bias power source $V_1$ through the bias resistor $R_9$, and the bases of the transistors $Q_1$ and $Q_{38}$ are directly biased by the bias power source $V_1$, a signal in phase with the inphase demodulated signal P appears at each of the load resistors $R_{13}$ and $R_{14}$. Similarly, if the orthogonal demodulated signal Q is input through a coupling capacitor $C_2$, signals in phase with and in opposite phase to the demodulated signal Q appear at the load resistors $R_{15}$ and $R_{16}$ of the differential amplifier constituted by the transistors $Q_{21}$ and $Q_{22}$.

In the first multiplying circuit, the inphase demodulated signal P is input to the base of the transistor $Q_{23}$, and the base of the transistor $Q_{24}$ is biased by the DC power source $V_1$, while a constant current $I_0$ from the constant current source $I_8$ flows in the commonly connected emitter. In this state, a current $I_{C0}$ and a current $\overline{I_{C0}}$ which are in phase with and in opposite phase to the demodulated signal P respectively flow in the collectors of the transistors $Q_{23}$ and $Q_{24}$. In addition, the bases of the transistors $Q_{25}$ and $Q_{28}$ of the double amplifier circuit are biased by the DC power source $V_2$, and the orthogonal demodulated signal Q is input to the bases of the transistors $Q_{26}$ and $Q_{27}$, while the commonly connected emitter is controlled by the currents $I_{C0}$ and $\overline{I_{C0}}$ which are in phase with and in opposite phase to the demodulated signal P. Therefore, the sum of the collector currents of the transistors $Q_{25}$ and $Q_{27}$ and the sum of the collector currents of the transistors $Q_{26}$ and $Q_{28}$ become currents $I_{C1}$ and $I_{C2}$ corresponding to the product output (P x Q) of the two demodulated signals and an output in opposite phase thereto.

Subsequently, the product output currents $I_{C1}$ and $I_{C2}$ of the demodulated signals P and Q respectively become common emitter currents flowing in the double amplifier circuit constituting the second multiplying circuit. In the double differential amplifier circuit of the second multiplying circuit, signals in phase with the demodulated signals P and Q are respectively supplied to the bases of the transistors $Q_{29}$ and $Q_{32}$ and to the bases of the transistors $Q_{30}$ and $Q_{31}$ in a differential manner through the load resistors $R_{13}$ and $R_{15}$. In this state, collector output currents $I_{C3}$ and $I_{C4}$ from the second multiplying circuit are proportional to values obtained by multiplying the product output (P x Q) of the two demodulated signals P and Q by the signal (P - Q).

In the same manner as described above, these two collector output currents $I_{C3}$ and $I_{C4}$ become common emitter currents flowing in the double differential amplifier circuit constituting the third multiplying circuit. Since a signal in phase with the demodulated signal P and a signal in opposite phase to the demodulated signal Q are differentially supplied to the bases of the transistors $Q_{33}$ to $Q_{36}$ of the double differential amplifier circuit of the third multiplying circuit through the load resistors $R_{14}$ and $R_{16}$, collector output currents $I_{C5}$ and $I_{C6}$ from the third multiplying circuit correspond to values obtained by multiplying the outputs from the second multiplying circuit by the signal {P - (-Q)}, i.e., the sum signal (P + Q).

With this operation, a voltage proportional to a voltage obtained by multiplying all the four signals, i.e., the demodulated signals P and Q, the sum signal (P + Q), and the difference signal (P - Q), as the multiplication result obtained by the first to third multiplying circuits, is output across output terminals a and b.

In this conventional Costas loop carrier wave reproducing circuit, the three double differential amplifier circuits are vertically stacked on each other to calculate P x Q x (P + Q) x (P - Q). With this arrangement, in order to linearly operate the circuit, 4 x (VBE + amplitude) + a voltage drop due to the load resistors + a voltage required to normally operate the constant current sources is required as a power source voltage. In practice, however, if VBE = 0.75 V, an amplitude = 0.5 $V_{PP}$, a voltage drop due to the load resistors = 1 V, and a voltage applied to the constant current sources = 1 V, $V_{CC} > (0.75 + 0.5) \times 4 + 1 + 1 = 7$ V is required. Therefore, the circuit cannot be operated by a power source voltage of 5 V.

## Summary of the Invention

It is an object of the present invention to provide a Costas loop carrier wave reproducing circuit which allows a decrease in power source voltage.

It is another object of the present invention to provide a Costas loop carrier wave reproducing circuit which allows the use of a MOS transistor.

In order to achieve the above objects, according to the present invention, there is provided a Costas loop carrier wave reproducing circuit comprising a first differential amplifier circuit for obtaining an inphase output from an inphase demodulated signal obtained by performing synchronous detection of a component in phase with a four-phase modulated wave, a second differential amplifier circuit for obtaining an orthogonal output from an orthogonal demodulated signal obtained by performing synchronous detection of an orthogonal component of the four-phase modulated wave, a multiplying circuit for multiplying outputs from the first and second differential amplifier circuits, a first square circuit for obtaining a square output of an output from the first differential amplifier circuit, a second square circuit for obtaining a square output of an output from the second differential amplifier circuit, and a double-balanced differential amplifier circuit for obtaining an output difference between the first and second square circuits and outputting a product of the output difference and an output from the multiplying circuit as a PLL control signal.

## Brief Description of the Drawings

Fig. 1 is a circuit diagram showing a detailed arrangement of a Costas loop carrier wave reproducing circuit according to an embodiment of the present invention;
Fig. 2 is a circuit diagram showing a detailed arrangement of a conventional Costas loop carrier wave reproducing circuit; and
Fig. 3 is a block diagram showing the principle of a four-phase demodulating circuit.

## Description of the Preferred Embodiment

The present invention will be described below with reference to the accompanying drawings.

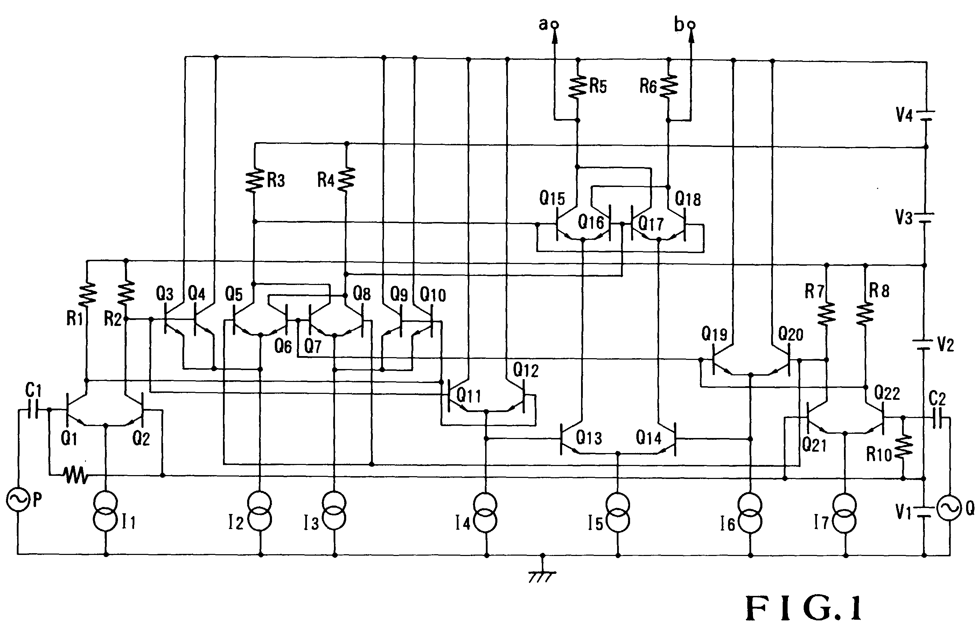

Fig. 1 shows a detailed arrangement of a Costas loop carrier wave reproducing circuit according to an embodiment of the present invention. This circuit comprises: a first differential amplifier circuit constituted by transistors $Q_1$ and $Q_2$, a constant current source $I_1$, and load resistors $R_1$ and $R_2$; a multiplying circuit constituted by transistors $Q_3$ to $Q_{10}$, constant current sources $I_2$ and $I_3$, and load resistors $R_3$ and $R_4$; a first square circuit constituted by transistors $Q_{11}$ and $Q_{12}$, and a constant current source $I_4$; a second square circuit constituted by transistors $Q_{19}$ and $Q_{20}$ and a constant current source $I_6$; a second differential amplifier circuit constituted by transistors $Q_{21}$ and $Q_{22}$, a constant current source

$I_7$, and load resistors $R_7$ and $R_8$; and a double-balanced differential amplifier circuit constituted by transistors $Q_{13}$ to $Q_{18}$, a constant current source $I_5$, and load resistors $R_5$ and $R_6$.

Assume that an inphase demodulated signal P is input through a coupling capacitor $C_1$. Since the base of the transistor $Q_1$ is biased by a bias power source $V_1$ through a bias resistor $R_9$ while the base of the transistor $Q_2$ is directly biased by the bias power source $V_1$, signals in phase with and in opposite phase to the demodulated signal P respectively appear at the load resistors $R_1$ and $R_2$.

Similarly, if an orthogonal demodulated signal Q is input through a coupling capacitor $C_2$, signals in phase with and in opposite phase to the demodulated signal Q respectively appear at the load resistors $R_7$ and $R_8$ of the differential amplifier circuit constituted by the transistors $Q_{21}$ and $Q_{22}$. In the multiplying circuit constituted by the transistors $Q_3$ to $Q_{10}$, a signal which is produced across the load resistor $R_2$ and is in phase with the demodulated signal P is input to the common base of the transistors $Q_3$ and $Q_4$, a signal which is produced across the load resistor $R_1$ and is in opposite phase to the demodulated signal P is input to the common base of the transistors $Q_9$ and $Q_{10}$, a signal which is produced across the load resistor $R_7$ and is in phase with the demodulated signal Q is input to the common base of the transistors $Q_5$ and $Q_8$, and a signal which is produced across the load resistor $R_8$ and is in opposite phase to the demodulated signal Q is input to the common base of the transistors $Q_6$ and $Q_7$. In this state, the product of the demodulated signals P and Q appear at the load resistors $R_3$ and $R_4$.

In the first square circuit constituted by the transistors $Q_{11}$ and $Q_{12}$, a signal which is produced across the load resistor $R_2$ connected to a power source $V_2$ lower than a power source $V_4$ and is in phase with the demodulated signal P is level-shifted and input to the base of the transistor $Q_{11}$, and a signal which is produced across the load resistor $R_1$ connected to the power source $V_2$ and is in opposite phase with the demodulated signal P is level-shifted and input to the base of the transistor $Q_{12}$. In this state, the square of the demodulated signal P is obtained as an output from the common emitter of the transistors $Q_{11}$ and $Q_{12}$.

Similarly, in the square circuit constituted by the transistors $Q_{19}$ and $Q_{20}$, a signal which is produced across the load resistor $R_8$ connected to the power source $V_2$ and is in opposite phase to the demodulated signal Q is level-shifted and input to the base of the transistor $Q_{19}$, and a signal which is produced across the load resistor $R_7$ connected to the power source $V_2$ and is in phase with the demodulated signal Q is level-shifted and input to the base of the transistor $Q_{20}$. In this state, the square of the demodulated signal Q is obtained as an output from the common emitter of the transistors $Q_{19}$ and $Q_{20}$.

In the double-balanced differential amplifier circuit constituted by the transistors $Q_{13}$ to $Q_{18}$, an output signal corresponding to the square of the demodulated signal P is input to the base of the transistor $Q_{13}$, and an output signal corresponding to the square of the demodulated signal Q is input to the base of the transistor $Q_{14}$. As a result, a current corresponding to the difference between a demodulated signal $P^2$ and a demodulated signal $Q^2$ flows in the collectors of the transistors $Q_{13}$ and $Q_{14}$. Meanwhile, the output signal obtained as the square of the demodulated signals P and Q is level-shifted and input to the bases of the transistors $Q_{15}$ and $Q_{18}$ constituting the double-balanced differential amplifier circuit through a load resistor $R_3$ connected to a power source $V_3$ lower than the power source $V_4$. Similarly, the output signal is level-shifted and input to the bases of the transistors $Q_{16}$ and $Q_{17}$ through a load resistor $R_4$ connected to the power source $V_3$. As a result, in the double-balanced differential amplifier circuit, the result obtained by performing a multiplication of the demodulated signals P and Q according to $P \times Q \times (P^2 - Q^2)$ is output to the load resistors $R_5$ and $R_6$.

The square circuit constituted by the transistors $Q_{11}$, $Q_{12}$, $Q_{19}$, and $Q_{20}$ will be described in detail below.

If the common emitter voltage of the transistors $Q_{11}$ and $Q_{12}$ is represented by $V_E$; the collector currents of the transistors $Q_{11}$ and $Q_{12}$, $I_{C1}$ and $I_{C2}$; the thermal voltage of the transistors $Q_{11}$ and $Q_{12}$, $v_T$; a reverse saturation current, $I_S$; and the base bias voltage of the transistors $Q_{11}$ and $Q_{12}$, $V_A$, the following equations can be obtained:

$$V_A + P - V_E = v_T \ell n \frac{I_{C1}}{I_S} \tag{1}$$

$$V_A - P - V_E = v_T \ell n \frac{I_{C2}}{I_S} \tag{2}$$

If equations (1) and (2) are added together, the following equation is established:

$$2V_A - 2V_E = v_T \ell n \frac{I_{C1} I_{C2}}{I_S^2} \tag{3}$$

If the mutual conductance of the differential circuit is represented by gm, and the current supplied from the constant current source $I_4$ is represented by $2I_0$ ($I_0 \gg P \times gm$), the following formulae are obtained:

$$I_{C1} \fallingdotseq I_0 + 2 \times P \times gm$$

$$I_{C2} \fallingdotseq I_0 - 2 \times P \times gm$$

Therefore, equation (3) is rewritten as follows:

$$2V_A - 2V_E = v_T \ell n\{ \frac{(I_O + 2P \times gm)(I_O - 2P \times gm)}{I_S^2}$$

$$= v_T \ell n\{ \frac{I_O^2}{I_S^2} (1 - \frac{4P^2 gm^2}{I_O^2}) \}$$

Since $I_O \gg P \times gm$,

$$2V_A - 2V_E \fallingdotseq 2v_T \ell n \frac{I_O}{I_S} - v_T \frac{4 \times P^2 \times gm^2}{I_O^2}$$

If gm is expressed by $v_T$ and $I_O$,

$$gm = \frac{2I_O}{4v_T} = \frac{I_O}{2v_T}$$

Therefore, $V_E$ is given by

$$V_E = \frac{P^2}{2v_T} + V_A - v_T \ell n \frac{I_O}{I_S}$$

With this operation, an output proportional to the square of the input signal P can be obtained.

As has been described above, according to the present invention, a practical power source voltage can be noticeably decreased as compared with the conventional circuit.

Assume that the base-emitter voltage of a transistor is 0.75 V, the amplitude is 0.5 $V_{PP}$, the voltage drop due to the load resistance of an output is 1 V, and the voltage applied to a constant current source is 1 V. In this case, the power source voltage is $V_{BE.} + 0.5 \text{ V} \times 2 + 1 \text{ V} + 1 \text{ V} = 3.75$ V. Therefore, even if the power source voltage is set to be 5 V, the circuit can be easily operated. That is, even a MOS transistor can be used.

**Claims**

1. A Costas loop carrier wave reproducing circuit comprising:

    a first differential amplifier circuit ($Q_1$, $Q_2$, $I_1$, $R_1$, $R_2$) for obtaining an inphase output from an inphase demodulated signal obtained by performing synchronous detection of a component in phase with a four-phase modulated wave;
    a second differential amplifier circuit ($Q_{21}$, $Q_{22}$, $I_7$, $R_7$, $R_8$) for obtaining an orthogonal output from an orthogonal demodulated signal obtained by performing synchronous detection of an orthogonal component of the four-phase modulated wave;
    a multiplying circuit ($Q_3$, $Q_4$, $Q_5$, $Q_6$, $Q_7$, $Q_8$, $Q_9$, $Q_{10}$, $I_2$, $I_3$, $R_3$, $R_4$) for multiplying outputs from said first and second differential amplifier circuits, characterised by:
    a first square circuit ($Q_{11}$, $Q_{12}$, $I_4$) for obtaining a square output of an output from said first differential amplifier circuit;
    a second square circuit ($Q_{19}$, $Q_{20}$, $I_6$) for containing a square output of an output from said second differential amplifier circuit; and
    a double-balanced differential amplifier ($Q_{13}$, $Q_{14}$, $Q_{15}$, $Q_{16}$, $Q_{17}$, $Q_{18}$, $I_5$, $R_5$, $R_6$) circuit for obtaining an output difference between said first and second square circuits and outputting a product of the output difference and an output from said multiplying circuit as a PLL control signal.

2. A circuit according to claim 1, further comprising a low-pass filter (8) for extracting a low-frequency component from an output of said double-balanced differential amplifier circuit, and a voltage-controlled oscillator (9) whose output frequency is controlled by an output voltage from said low-pass filter to generate inphase (A) and orthogonal (B) reference phase carrier waves for synchronous detection.

3. A circuit according to claim 1, wherein said multiplying circuit comprises a first transistor ($Q_3$, $Q_4$) for receiving a first input as a base input, a second transistor ($Q_9$, $Q_{10}$) for receiving a second input in opposite phase to the first input as a base input, a third transistor for receiving a third input as a base input, a fourth transistor ($Q_7$, $Q_8$) connected to said third transistor to constitute a double differential circuit, for receiving a fourth input in opposite phase to the third input as a base input, a first constant current ($I_2$) source to which emitters of said first and third transistors are commonly connected, a second constant current source ($I_3$) to which emitters of said second and

6

EP 0 467 387 B1

fourth transistors are commonly connected, and load resistors ($R_3$, $R_4$) to which collectors of said third and fourth transistors constituting said double differential circuit are commonly connected.

4. A circuit according to claim 3, wherein said first and second transistors are respectively constituted by transistor pairs having collectors, bases, and emitters, all of which are commonly connected, and said third and fourth transistors are respectively constituted by transistor pairs having bases and emitters, all of which are commonly connected, and collectors respectively connected to two load resistors.

5. A circuit according to claim 1, wherein a load resistor ($R_3$) of said multiplying circuit is connected to a power source having a voltage ($V_3$) lower than a further power source voltage ($V_4$) to supply a level-shifted output to said double-balanced amplifier circuit.

6. A circuit according to claim 1, wherein said first and second differential amplifier circuits have load resistors ($R_1$, $R_2$; $R_7$, $R_8$) connected to a power source ($V_2$) having a voltage lower than a further power source voltage ($V_4$), and respectively supply level-shifted outputs to said multiplying circuit and said square circuits.

**Patentansprüche**

1. Trägerwellen-Wiedergabeschaltung mit Costasschleife, die folgendes aufweist:

eine erste Differenzverstärkerschaltung ($Q_1$, $Q_2$, $I_1$, $R_1$, $R_2$), um ein phasengleiches Ausgangssignal aus einem phasengleichen, demodulierten Signal zu erhalten, das durch synchrone Detektion einer Komponente gewonnen wurde, die mit einer vierphasen-modulierten Welle phasengleich ist;
eine zweite Differenzverstärkerschaltung ($Q_{21}$, $Q_{22}$, $I_2$, $R_7$, $R_8$), um ein orthogonales Ausgangssignal aus einem orthogonalen, demodulierten Signal zu erhalten, das durch synchrone Detektion einer orthogonalen Komponente der vierphasen-modulierten Welle gewonnen wurde;
eine Verstärkerschaltung ($Q_3$, $Q_4$, $Q_5$, $Q_6$, $Q_7$, $Q_8$, $Q_9$, $Q_{10}$, $I_2$, $I_3$, $R_3$, $R_4$), zur Verstärkung von Ausgangssignalen aus der ersten und zweiten Differenzverstärkerschaltung, gekennzeichnet durch
eine erste Rechteckschaltung ($Q_{11}$, $Q_{12}$, $I_4$), um ein Rechteck-Ausgangssignal eines Ausgangssignals aus der ersten Differenzverstärkerschaltung zu erhalten;
eine zweite Rechteckschaltung ($Q_{19}$, $Q_{20}$, $I_6$), um ein Rechteck-Ausgangssignal eines Ausgangssignals aus der zweiten Differenzverstärkerschaltung zu erhalten; und
eine Doppelabgleich-Differenzverstärkerschaltung ($Q_{13}$, $Q_{14}$, $Q_{15}$, $Q_{16}$, $Q_{17}$, $Q_{18}$, $I_5$, $R_5$, $R_6$), um eine Ausgangssignaldifferenz zwischen der ersten und der zweiten Rechteckschaltung zu erhalten und ein Produkt aus der Ausgangssignaldifferenz und einem Ausgangssignal von der Verstärkerschaltung als PLL-Steuersignal auszugeben.

2. Schaltung nach Anspruch 1, die weiterhin folgendes aufweist:

einen Tiefpaßfilter (8) zum Extrahieren einer Niederfrequenzkomponente aus einem Ausgangssignal der Doppelabgleich-Differenzverstärkerschaltung, und
einen spannungsgesteuerten Oszillator (9), dessen Ausgangssignalfrequenz durch eine Ausgangssignalspannung vom Tiefpaßfilter gesteuert wird, um phasengleiche (A) und orthogonale (B) Referenzphasen-Trägerwellen für die synchronen Detektion zu erzeugen.

3. Schaltung nach Anspruch 1, bei der die Verstärkerschaltung folgendes aufweist:

einen ersten Transistor ($Q_3$, $Q_4$), um ein erstes Eingangssignal als Basiseingangssignal zu empfangen,
einen zweiten Transistor ($Q_9$, $Q_{10}$), um ein zweites Eingangssignal in einer zum ersten Eingangssignal entgegengesetzten Phase als Basiseingangssignal zu empfangen,
einen dritten Transistor, um ein drittes Eingangssignal als Basiseingangssignal zu empfangen,
einen vierten Transistor ($Q_7$, $Q_8$), der mit dem dritten Transistor verbunden ist, um eine Doppel-Differenzschaltung zu bilden, um ein viertes Eingangssignal in einer zum dritten Eingangssignal entgegengesetzten Phase als Basiseingangssignal zu empfangen,
eine erste Konstantstromquelle (12), mit der der Emitter des ersten und des dritten Transistors gemeinsam verbunden sind,
eine zweite Konstantstromquelle ($I_3$), mit der der Emitter des zweiten und des vierten Transistors gemeinsam

7

verbunden sind, und

Lastwiderstände ($R_3$, $R_4$), mit denen der Kollektor des dritten und des vierten Transistors, die die Doppel-Differenzschaltung bilden, gemeinsam verbunden sind.

4. Schaltung nach Anspruch 3, bei der der erste und der zweite Transistor jeweils aus Transistorpaaren mit Kollektor, Basis und Emitter bestehen, die alle gemeinsam verbunden sind, bei der der dritte und der vierte Transistor jeweils aus Transistorpaaren mit Basis und Emitter bestehen, die alle gemeinsam verbunden sind, und bei der der Kollektor jeweils mit zwei Lastwiderständen verbunden ist.

5. Schaltung nach Anspruch 1, bei der ein Lastwiderstand ($R_3$) der Verstärkerschaltung mit einer Stromquelle verbunden ist, die eine Spannung (V3) aufweist, die niedriger ist als eine weitere Stromquellenspannung ($V_4$), um der Doppelabgleich-Verstärkerschaltung ein pegelverschobenes Ausgangssignal zuzuführen.

6. Schaltung nach Anspruch 1, bei der die erste und die zweite Differenzverstärkerschaltung Lastwiderstände ($R_1$, $R_2$; $R_7$, $R_8$) aufweisen, die mit einer Spannungsquelle verbunden sind, die eine Spannung ($V_2$) liefert, die niedriger ist als eine weitere Spannungsquellenspannung ($V_4$), und bei der die Differenzverstärkerschaltungen der Verstärkerschaltung und den Rechteckschaltungen jeweils pegelverschobene Ausgangssignale zuführen.

**Revendications**

1. Circuit de reproduction d'une onde porteuse à boucle de Costa comprenant :

   - un premier circuit amplificateur différentiel ($Q_1$, $Q_2$, $I_1$, $R_1$, $R_2$) pour obtenir une sortie en phase à partir d'un signal démodulé en phase obtenu en effectuant la détection synchrone d'une composante en phase avec une onde modulée tétraphasée;
   - un deuxième circuit amplificateur différentiel ($Q_{21}$, $Q_{22}$, $I_7$, $R_7$, $R_8$) pour obtenir une sortie orthogonale à partir d'un signal démodulé orthogonal obtenu en effectuant la détection synchrone d'une composante orthogonale de l'onde modulée tétraphasée;
   - un circuit multiplicateur ($Q_3$, $Q_4$, $Q_5$, $Q_6$, $Q_7$, $Q_8$, $Q_9$, $Q_{10}$, $I_2$, $I_3$, $R_3$, $R_4$) pour multiplier les sorties desdits premier et deuxième circuits amplificateurs différentiels,

   caractérisé par :

   - un premier circuit d'élévation au carré ($Q_{11}$, $Q_{12}$, $I_4$) pour obtenir une sortie élevée au carré d'une sortie provenant dudit premier circuit amplificateur différentiel;
   - un deuxième circuit d'élévation au carré ($Q_{19}$, $Q_{20}$, $I_6$) pour obtenir une sortie élevée au carré d'une sortie provenant dudit deuxième circuit amplificateur différentiel; et
   - un circuit amplificateur différentiel double équilibré ($Q_{13}$, $Q_{14}$, $Q_{15}$, $Q_{16}$, $Q_{17}$, $Q_{18}$, $I_5$, $R_5$, $R_6$) pour obtenir une différence des sorties entre lesdits premier et deuxième circuits d'élévation au carré et sortir un produit de la différence des sorties et d'une sortie provenant dudit circuit multiplicateur en tant que signal de commande d'une boucle de verrouillage de phase (PLL).

2. Circuit selon la revendication 1, comprenant en outre un filtre passe-bas (8) pour extraire une composante basse fréquence d'une sortie dudit circuit amplificateur différentiel double équilibré, et un oscillateur commandé en tension (9) dont la fréquence de sortie est commandée par une tension de sortie dudit filtre passe-bas pour générer des ondes porteuses à phases de référence en phase (A) et orthogonale (B) pour une détection synchrone.

3. Circuit selon la revendication 1, dans lequel ledit circuit multiplicateur comprend un premier transistor ($Q_3$, $Q_4$) pour recevoir une première entrée en tant qu'entrée de base, un deuxième transistor ($Q_9$, $Q_{10}$) pour recevoir une deuxième entrée en opposition de phase par rapport à la première entrée en tant qu'entrée de base, un troisième transistor pour recevoir une troisième entrée en tant qu'entrée de base, un quatrième transistor ($Q_7$, $Q_8$); connecté audit troisième transistor pour constituer un circuit différentiel double, pour recevoir une quatrième entrée en opposition de phase par rapport à la troisième entrée en tant qu'entrée de base, une première source de courant constant ($I_2$) à laquelle les émetteurs desdits premier et troisième transistors sont connectés en commun, une deuxième source de courant constant ($I_3$) à laquelle les émetteurs desdits deuxième et quatrième transistors sont connectés en commun, et des résistances de charge (R3, R4) auxquelles les collecteurs desdits troisième et quatrième transistors constituant ledit circuit différentiel double sont connectés en commun.

4. Circuit selon la revendication 3, dans lequel lesdits premier et deuxième transistors sont constitués respectivement par des paires de transistors ayant des collecteurs, des bases et des émetteurs, tous étant connectés en commun, et lesdits troisième et quatrième transistors sont constitués respectivement par des paires de transistors ayant des bases et des émetteurs, tous étant connectés en commun, et des collecteurs connectés respectivement à deux résistances de charge.

5. Circuit selon la revendication 1, dans lequel une résistance de charge (R3) dudit circuit multiplicateur est connectée à une source de puissance ayant une tension (V3) inférieure à une tension ($V_4$) d'une autre source de puissance pour fournir une sortie à niveau décalé audit circuit amplificateur équilibré double.

6. Circuit selon la revendication 1, dans lequel lesdits premier et deuxième circuits amplificateurs différentiels ont des résistances de charge ($R_1$, $R_2$; $R_7$, $R_8$) connectées à une source de puissance ayant une tension ($V_2$) inférieure à une tension ($V_4$) d'une autre source de puissance, et fournissent respectivement des sorties à niveaux décalés audit circuit multiplicateur et auxdits circuits d'élévation au carré.

FIG.1

10

FIG.2
PRIOR ART

EP 0 467 387 B1

FIG.3